# EUROPÄISCHE PATENTSCHRIFT

(11) **EP 1 609 704 B1**
(45) Veröffentlichungstag und Bekanntmachung des Hinweises auf die Patenterteilung: **08.08.2007**
(21) Anmeldenummer: 05002595.6
(22) Anmeldetag: 08.02.2005
(51) Int. Cl.: B62D 29/04, B62D 21/02

(54) **Fahrgestell für LKW-Motorwagen oder Anhänger**
Chassis for heavy goods vehicle or trailer
Châssis de camion ou de remorque.

(30) Priorität: 22.06.2004 DE 102004030108; 23.11.2004 DE 102004056377
(43) Veröffentlichungstag der Anmeldung: 28.12.2005
(73) Patentinhaber: MTB Baustoffhandelsgesellschaft mbH & Co. KG, 58099 Hagen (DE); Kaiser, Ria, Dipl.-Ing., 21077 Hamburg (DE); Lange, Hans Juergen, 21077 Hamburg (DE)
(72) Erfinder: Kaiser, Ria, Dipl.Ing., 21077 Hamburg (DE); Lange, Hans-Juergen, 21077 Hamburg (DE)
(74) Vertreter: Köchling, Conrad-Joachim

(56) Entgegenhaltungen:
- WO-A-02/092414
- US-A- 6 158 773
- US-A1- 2003 001 376
- US-A1- 2003 184 074
- MAY G L: "COMPOSITE TRUCK FRAME RAILS TESTED" AUTOMOTIVE ENGINEERING, SOCIETY OF AUTOMOTIVE ENGINEERS. WARRENDALE, US, Bd. 87, Nr. 11, November 1979 (1979-11), Seiten 77-79, XP002041913 ISSN: 0098-2571

## Beschreibung

Die Erfindung betrifft ein Fahrgestell für einen Motorwagen eines Lastkraftwagens, LKW-Anhänger oder Auflieger, bestehend aus einem Rahmen, an dem Fahrzeugachsen und gegebenenfalls ein Aufbau befestigt ist.

Beispielsweise in der DE 43 36 709 A1 sind Fahrgestelle dieser Art beschrieben. Üblicherweise besteht ein solches Fahrgestell für LKW-Anhänger oder Auflieger aus zwei parallel zueinander verlaufenden Längsträgern, die mit Abstand voneinander parallel zueinander verlegt sind und durch Querstreben versteift sind, wobei auf die Längsträger eine durchgehende oder mehrteilige Bodenplatte aufgelegt ist. Auf ein derartig ausgebildetes Fahrgestell kann ein geeigneter Aufbau aufgebaut werden.

Bei solchen Konstruktionen ist es üblich, dass die Längsträger über ihren Längsverlauf verkröpft sind, wobei jeder Längsträger im in Normalfahrtrichtung vorderen Bereich, in welchem die vordere Achse des Anhängers oder der Sattelzugzapfen des Aufliegers anzuordnen ist, ein etwa horizontaler Längsbereich vorgesehen ist, an den über eine Verkröpfung ein zweiter im Wesentlichen horizontaler Längsbereich angeschlossen ist, der entweder bis zum hinteren Trägerende durchläuft, insbesondere bei Aufliegern, oder bis in den Bereich vor der Hinterachsanordnung reicht und dort an das Ende eines zweiten verkröpften Bereiches anschließt, der einen horizontalen Endbereich bildet, insbesondere bei Anhängern. Bei Aufliegern ist es üblich, den Bereich, in dem der Sattelzugzapfen angeordnet ist, mit größerer Höhe vom fahrbaren Untergrund auszubilden als den eigentlichen Lastaufnahmebereich, der den hinteren Teil des Aufliegers bildet. Der Auflieger ist meist mehrachsig, beispielsweise dreiachsig ausgebildet.

Bei LKW-Anhängern ist es üblich, den Längsträger über seinen Längsverlauf zweifach zu verkröpfen, wobei im vorderen Bereich der Längsträger in einem relativ großen Abstand vom Aufstandsboden des Fahrzeuges verläuft, so dass unter diesem Bereich die vordere Fahrzeugachse mit Deichsel oder dergleichen anzuordnen ist.

Im hinteren Fahrzeugbereich ist der Träger ebenfalls gegenüber der Aufstandsebene in erheblicher Höhe angeordnet, vorzugsweise auf gleichem Niveau wie der oben beschriebene Vorderbereich, wobei unter dem hinteren Bereich die hintere Achse oder die hinteren Achsen des Anhängers angeordnet sind.

Um das Fahrgestell möglichst leichtgewichtig ausführen zu können, so dass die Nutzlast des Anhängers oder Aufliegers relativ groß ist, ist es bekannt, die Längsträger des Fahrgestells aus Aluminiumlegierungen zu fertigen, wodurch eine Gewichtsersparnis gegenüber aus Stahl bestehenden Fahrgestellen erreicht wird.

Auch bei Aufbauten von LKW-Anhängern oder Aufliegern ist es bekannt, Halbrundmulden oder dergleichen als Aufbau anzuordnen, wobei die Mulden aus Stahl oder auch aus Aluminium zum Zwecke der Gewichtserleichterung ausgebildet sind. Es wird hierzu beispielsweise auf das deutsche Gebrauchsmuster DE 202 13 738 U1 verwiesen.

Bei solchen Mulden ist es im Übrigen bekannt, diese mit dem Abgas des Zugfahrzeuges zu beheizen, wozu die Mulden doppelwandig ausgebildet sind und ein Strömungskanal für das Abgas durch die doppelwandige Wand der Mulden gebildet ist.

Ausgehend von diesem Stand der Technik liegt der Erfindung die Aufgabe zugrunde, ein Fahrgestell gattungsgemäßer Art zu schaffen, welches äußerst leichtgewichtig gestaltet ist, so dass die Nutzlast des entsprechenden Fahrzeuges, Anhängers oder Aufliegers vergrößert ist.

Zur Lösung dieser Aufgabe wird vorgeschlagen, bei einem Rahmen aus einem Carbon-Faser-Verbundwerkstoff wie in der US 2003/0001376 A1 offenbart ist, dass der Rahmen aus einer etwa U-förmigen Oberschale und einem etwa U-förmigen Unterteil jeweils in Form eines mehrlagigen CFK-Formteiles besteht, wobei die Oberschale und das Unterteil mit einander entgegen gerichteten Schenkeln zusammengesetzt und miteinander verbunden sind, so dass zwischen Oberschale und Unterteil ein Hohlraum gebildet ist.

Entgegen der herkömmlichen Technik werden nicht Leiterrahmen mit Längsträgern und Querversteifungen sowie eine aufgelegte Verbundplatte vorgesehen, sondern der Rahmen wird einheitlich aus Carbon-Faser-Verbundwerkstoff (CFK) gefertigt, so dass ein einfaches, sehr leichtgewichtiges Bauteil als Rahmen zur Verfügung gestellt ist.

Durch die erfindungsgemäße Ausbildung wird ein äußerst stabiler Rahmen erzeugt. Die Schenkel der U-förmigen Teile sind im Wesentlichen gleich lang ausgebildet und können zur Erzielung von unterschiedlichen Traglasten und für unterschiedliche Fahrzeugtypen unterschiedlich lang ausgebildet werden, so dass das den Rahmen bildende Hohlteil unterschiedliche Höhe aufweist. Ein in dieser Art ausgebildeter Rahmen kann beispielsweise bei üblichen Abmessungen so gestaltet sein, dass sein Gesamtgewicht bei ca. 400 bis 430 Kg liegt.

Bevorzugt ist dabei vorgesehen, dass die Carbon-Fasern des Verbundwerkstoffes mit Harz getränkt und der so gebildete Werkstoff ausgehärtet ist.

Des Weiteren ist bevorzugt vorgesehen, dass der Rahmen aus Formteilen zusammengefügt ist, die aus CFK bestehen.

Eine besonders bevorzugte Weiterbildung wird darin gesehen, dass die den Rahmen bildenden Formteile jeweils aus mehreren Lagen CFK bestehen, die multidirektional zueinander ausgerichtet sind.

Hierbei können mehrere aus CFK-Werkstoff übereinander gelegt und miteinander durch Wärmeeinwirkung verbunden werden, wobei die Fasern der Lagen multidirektional zueinander ausgerichtet sind, so dass eine hohe Tragfähigkeit des Rahmens erreicht ist.

Bevorzugt ist dabei vorgesehen, dass die Schenkel von Oberschale und Unterteil miteinander verbunden sind, insbesondere stoffschlüssig durch Verschmelzung, Verklebung und/oder Verschweißung.

Um die Stabilität noch zu verbessern, kann vorgesehen sein, dass die Schenkel des Unterteils an ihrem freien Ende abgewinkelt sind, vorzugsweise rechtwinklig voneinander weg gerichtet, die Basis des Unterteils über die Schenkel seitlich vorragt und die Oberschale mit ihrer Basis auf die abgewinkelten Enden flächig aufgelegt und mit diesen verbunden ist sowie mit ihren gegebenenfalls ebenfalls abgewinkelten oder auch nicht abgewinkelten Schenkeln an den vorragenden Enden der Basis des Unterteils anliegt und mit dieser im Anlagebereich verbunden ist.

Durch diese Ausbildung wird im Bereich der nebeneinander angeordneten Schenkel des Unterteils und der Oberschale jeweils noch ein Hohlraum erzeugt, wodurch die Traglast weiterhin verbessert wird.

Ebenfalls zur Verbesserung der Traglast kann vorgesehen sein, dass die freien Enden der Schenkel des Unterteils beidseitig Abwinklungen aufweisen und im Querschnitt eine T-Form bilden, auf deren Querhaupt die Basis der Oberschale aufgelegt und mit dieser verbunden ist.

Zum Zwecke der Gewichtserleichterung kann vorgesehen sein, dass die Oberschale und/oder das Unterteil in ihrer Basis Lochungen aufweisen.

Bevorzugt kann auch vorgesehen sein, dass die Oberschale in ihren Schenkeln Ausnehmungen aufweist.

Eine besonders vorteilhafte Ausgestaltung wird darin gesehen, dass die Ausnehmungen etwa dreieckig in wechselweise entgegengesetzter Ausrichtung sind.

Eine vorteilhafte Weiterbildung wird darin gesehen, dass bei einem Fahrgestell für ein Kippfahrzeug die Kippwellenaufnahme am Rahmen insbesondere an der Oberschale am in Fahrtrichtung hinteren Endbereich angeformt ist.

Es entfällt hierdurch die separate Ausbildung der Kippwellenaufnahme und deren Befestigung an dem Fahrgestell, da erfindungsgemäß die Kippwellenaufnahme integraler Bestandteil der Oberschale oder der Unterschale ist. Des Weiteren wird hierdurch eine weitere nicht unerhebliche Gewichtsersparnis erreicht.

Aus dem gleichen Grunde kann bevorzugt vorgesehen sein, dass am Rahmen, insbesondere an der Basis des Unterteils, mindestens ein Achsbock angeformt oder befestigt, insbesondere angeschraubt ist, der aus Metall oder vorzugsweise aus CFK-Verbundwerkstoff besteht.

Dabei kann vorgesehen sein, dass Achsböcke paarweise zur Aufnahme einer Achse vorgesehen sind.

Zudem kann hierbei vorgesehen sein, dass die Achsbockpaare jeweils durch eine Traverse verbunden sind, die vorzugsweise aus CFK-Verbundwerkstoff besteht.

Auch kann vorgesehen sein, dass bei luftgefedertem Fahrgestell die Luftbalgaufnahme(n) am Rahmen angeformt sind.

Eine bevorzugte Weiterbildung wird darin gesehen, dass der Rahmen, insbesondere der aus U-förmigen Teilen zusammengesetzte Rahmen, mindestens einen Hohlraum aufweist, der durch Verschlussplatten oder -klappen verschlossen ist und in dem Aggregate, zum Beispiel Steuerungsteile, Luftbehälter, geschützt angeordnet sind, wobei von den Aggregaten Stutzen abgehen, die von der Außenseite, insbesondere Unterseite des Rahmens zugänglich sind und vorzugsweise verwechslungsfrei konturierte Form aufweisen, wobei die Stutzen vorzugsweise an den Verschlussplatten oder - klappen angeordnet sind.

Im Hohlraum des Fahrwerkes können Abteile gebildet sein und gegebenenfalls mit Kappen oder Platten verschlossen sein, die zur Aufnahme von Aggregaten, beispielsweise Steuerungsteilen oder Luftbehältern dienen.

Um einen unverwechselbaren Anschluss von entsprechenden Anschlussteilen zu gewährleisten, kann dabei vorgesehen sein, dass die Stutzen verwechslungsfrei konturierte Form aufweisen.

Zudem kann bevorzugt vorgesehen sein, dass bei einem Sattelauflieger am in Fahrtrichtung vorderen Ende des Rahmens eine Aufnahme für einen Königsbolzen und/oder ein Kippzylinderlager ausgebildet ist, vorzugsweise auf CFK-Verbundwerkstoff angeformt ist.

Dabei ist bevorzugt vorgesehen, dass eine Halterung des Königsbolzens und/oder das Kippzylinderlager im Hohlraum des Rahmens zwischen der Basis der Oberschale und der Basis des Unterteils angeordnet und an diesen befestigt, angeformt oder stoffschlüssig verbunden ist.

Zudem kann hierbei bevorzugt vorgesehen sein, dass im Bereich des Drehkreises der Sattelplatte der Rahmen oder die Basis des Unterteils eine Vertiefung nach Art einer Sicke aufweist, in die unterseitig eine Verschleißplatte eingelegt und an dieser fixiert ist.

Eine bevorzugte Weiterbildung, die auch als selbständig erfinderisch angesehen wird, wird darin gesehen, dass auf dem Rahmen ein Aufbau, insbesondere eine Transportmulde, angeordnet ist, der oder die aus CFK-Verbundwerkstoff besteht.

Bevorzugt ist dabei vorgesehen, dass die Transportmulde mindestens im Bereich ihrer Seitenwände doppellagig unter Einschluss eines Hohlraumes ausgebildet ist.

Hierbei kann in an sich bekannter Weise vorgesehen sein, dass der Hohlraum einen Abgaseinlass am in Fahrtrichtung vorderen Endbereich und einen Abgasauslass am hinteren Endbereich aufweist.

Alternativ oder zusätzlich kann vorgesehen sein, dass am Rahmen oder an der Transportmulde eine Heizung gegebenenfalls mit Wärmetauscher angeordnet ist, die oder der mit dem Hohlraum zwischen den Seitenwänden oder mit Hohlprofilen der Seitenwände oder des Bodens der Transportmulde verbunden ist, um den Boden und/oder die Transportmulde, insbesondere deren Seitenwände zu beheizen.

Auch kann vorgesehen sein, dass bei einem Sattelzugfahrzeug am in Fahrtrichtung hinteren Ende des Rahmens eine Sattelplatte angeordnet ist, vorzugsweise aus CFK- Verbundwerkstoff angeformt ist.

Ausführungsbeispiele der Erfindung sind in der Zeichnung dargestellt und im Folgenden näher beschrieben. Es zeigt:

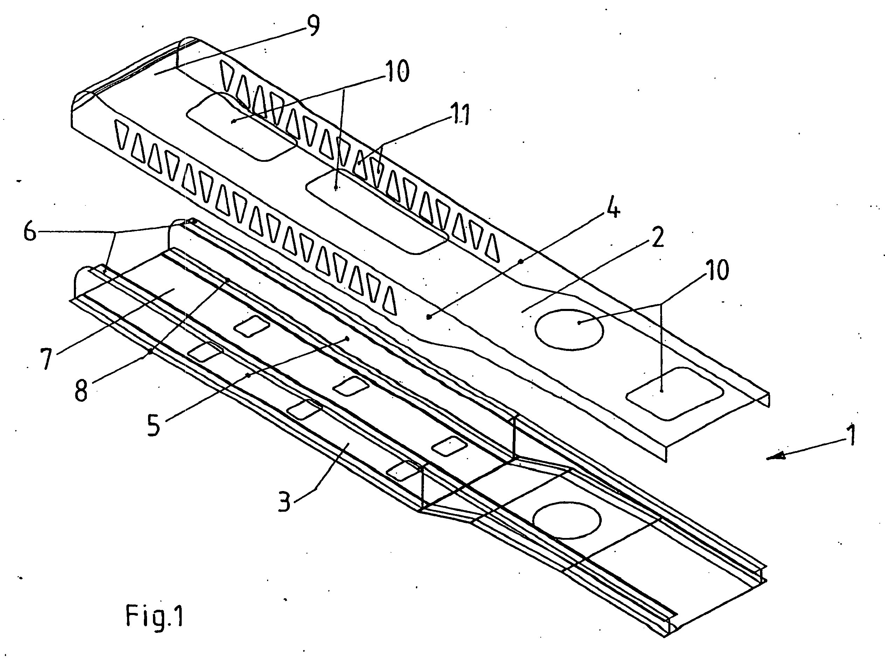

- Figur 1: einen Rahmen eines Fahrgestells in noch nicht zusammengefügter Form in Ansicht der Einzelteile;

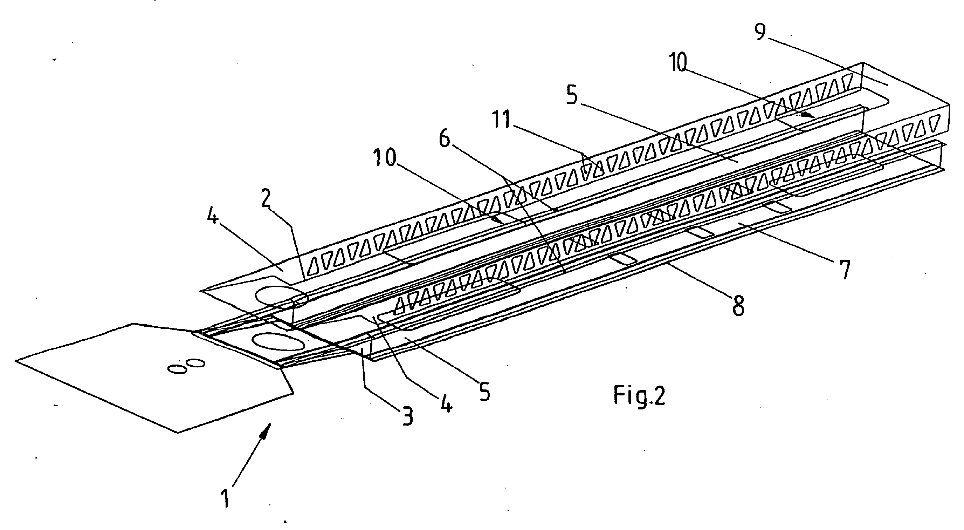

- Figur 2: eine Variante in ähnlicher Darstellung;

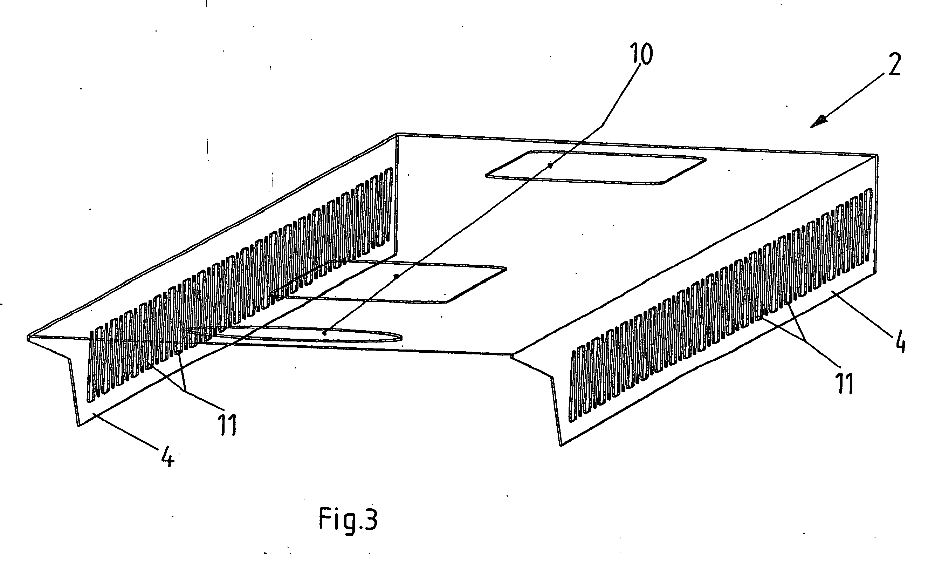

- Figur 3: eine Einzelheit in vergrößerter Darstellung;
- Figur 4: einen kompletten Rahmen von schräg unten gesehen;

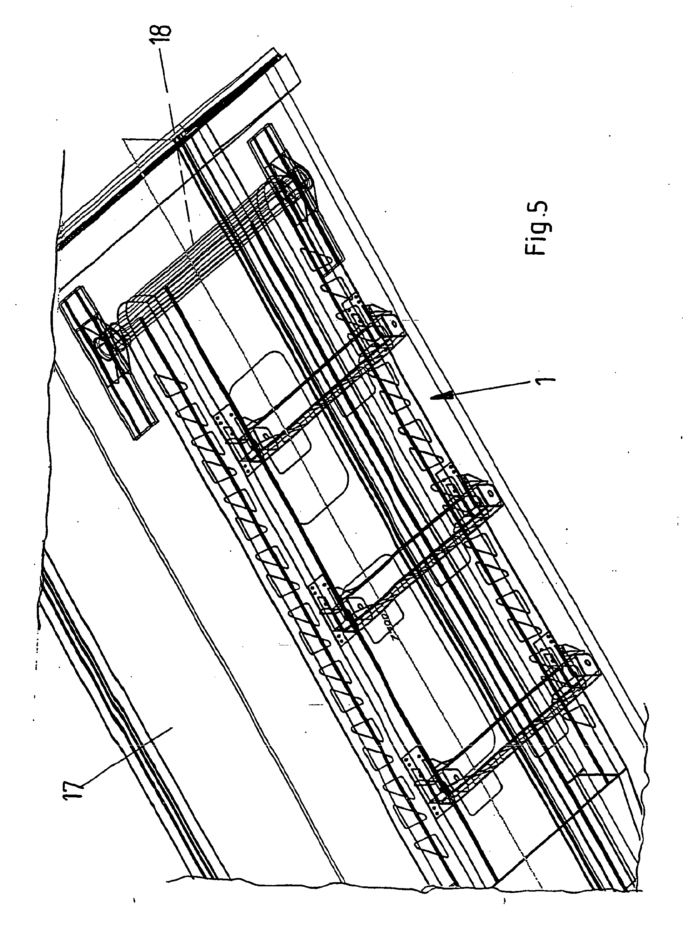

- Figur 5: einen Teil eines Rahmens nebst Aufbau von unten gesehen;

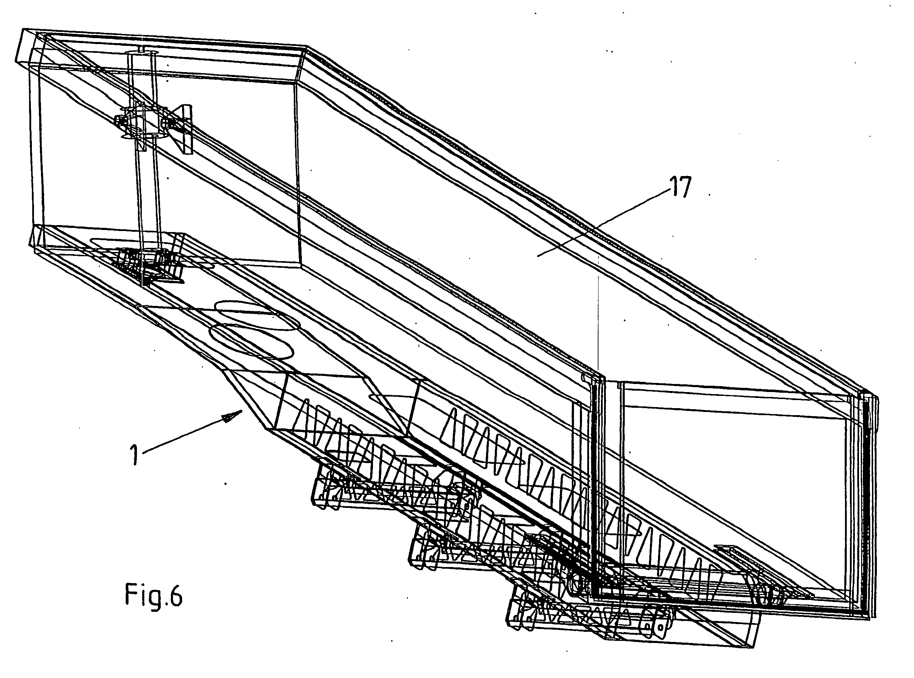

- Figur 6: einen Rahmen mit Aufbau in Ansicht;
- Figur 7: desgleichen in Seitenansicht.

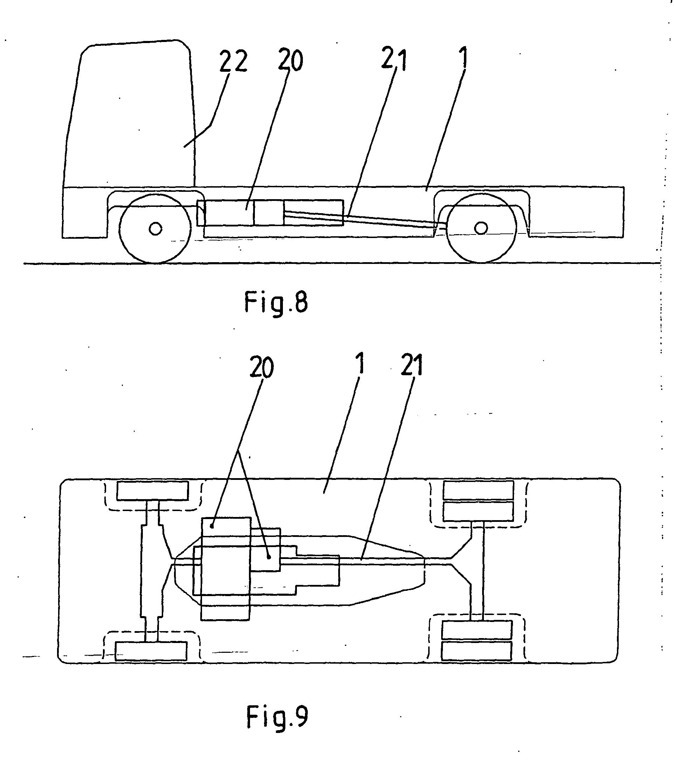

- Figur 8: ein Fahrgestell eines Motorwagens mit Motor, Antriebsstrang und Achsen in Seitenansicht;
- Figur 9: desgleichen in Draufsicht;

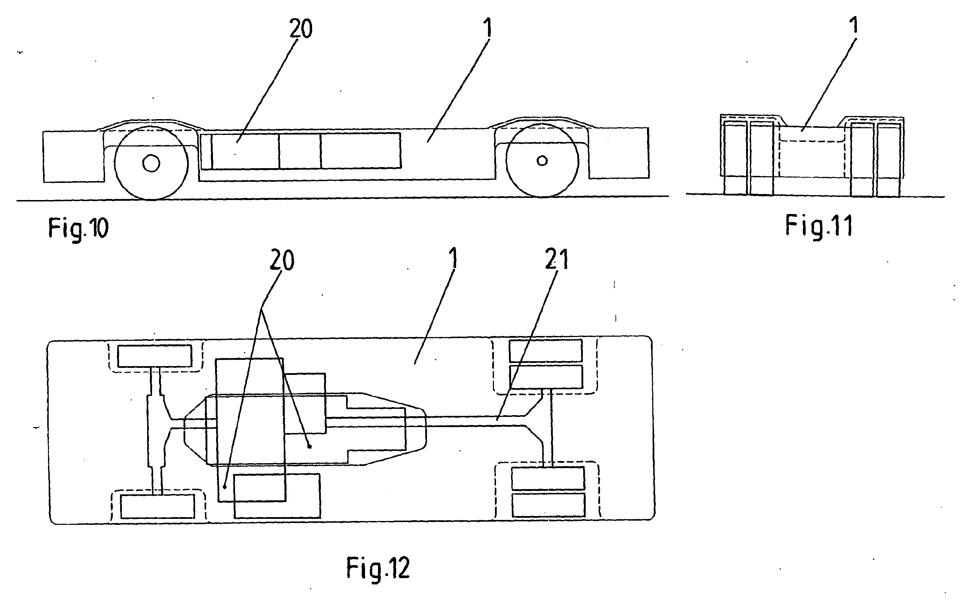

- Figur 10: eine Variante in der Ansicht gemäß Figur 1 gesehen;
- Figur 11: desgleichen von vorn gesehen;
- Figur 12: desgleichen in Draufsicht.

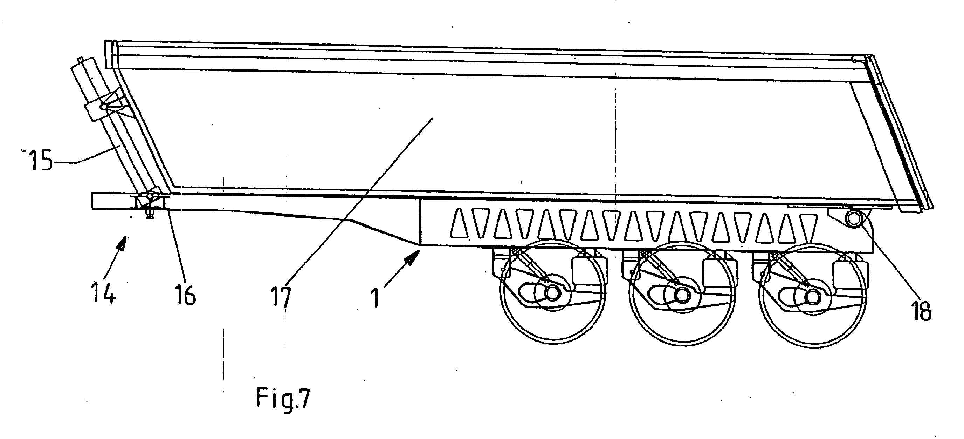

In der Zeichnung ist ein Fahrgestell für einen LKW-Auflieger und es sind Fahrgestelle für einen Motorwagen eines LKW gezeigt. Dieses Fahrgestell besteht aus einem Rahmen 1 an dem, wie in Figur 7 veranschaulicht, beispielsweise Fahrzeugachsen und gegebenenfalls ein Aufbau befestigt ist.

Der Rahmen 1 besteht aus Teilen, die aus Carbon-Faser-Verbundwerkstoff gefertigt sind. Dabei werden die Carbon-Fasern des Verbundwerkstoffes mit Harz getränkt und laminiert, wobei die so gebildeten Vorprodukte in Autoklaven erhitzt werden, so dass der Verbundwerkstoff ausgehärtet ist. Dabei besteht der Rahmen aus zwei Formteilen, die jeweils aus CFK bestehen. Die den Rahmen bildenden Formteile sind jeweils aus mehreren Lagen von CFK gefertigt, wobei beispielsweise eine 11-lagige Anordnung entsprechender Lagen übereinander vorgesehen ist und eine multidirektionale Ausrichtung der Fasern zueinander vorgesehen ist.

Vorzugsweise besteht der Rahmen 1 aus einer etwa U-förmigen Oberschale 2 und einem etwa U-förmigen Unterteil 3, wobei gegebenenfalls die Oberschale 2 oder das Unterteil 3 gegenüber dem anderen Teil in Richtung auf das vordere Ende des Rahmens verlängert sein kann. Die Oberschale 2 und das Unterteil 3 sind mit einander entgegen gerichteten Schenkeln 4 beziehungsweise 5 zusammengesetzt und miteinander verbunden, so dass zwischen der Oberschale 2 und dem Unterteil 3 ein Hohlraum gebildet ist. Gemäß der Erfindung können die Schenkel 4 der Oberschale 2 und die Schenkel 5 des Unterteils 3 ineinander liegen und miteinander stoffschlüssig verbunden sein.

Im Ausführungsbeispiel sind die Schenkel 5 des Unterteils 3 an ihren freien Enden beidseits abgewinkelt (Abwinklungen 6), wobei auch die Basis 7 des Unterteils 3 seitlich über die Schenkel 5 vorragt (vorragender Streifen 8). Die Oberschale 2 ist mit ihrer Basis 9 auf die abgewinkelten Enden 6 flächig aufgelegt und mit diesen verbunden. Des Weiteren liegt die Oberschale mit den freien Enden der Schenkel 4 an den überstehenden Bereichen 8 der Basis 7 des Unterteils 3 an und ist dort im Anlagebereich verbunden.

Wie aus den Zeichnungsfiguren ersichtlich, weist insbesondere die Oberschale 2 an ihrer Basis 9 Lochungen 10 auf, die zur Gewichtserleichterung und auch zur Anordnung von Aggregaten dienen können. Zusätzlich weist vor allem die Oberschale 2 in ihren Schenkeln 4 Ausnehmungen 11 auf, die dreieckig gleichschenklig ausgebildet sind, wobei die Spitze des Dreieckes wechselweise nach oben und nach unten gerichtet ist. Es wird hierdurch eine erhebliche Gewichtserleichterung erreicht, ohne die Stabilität zu beeinträchtigen.

Wie in Figur 7 verdeutlicht, kann bei einem Fahrgestell für ein Kippfahrzeug die Kippwellenaufnahme 18 im Rahmen, insbesondere an der Oberschale 2 oder auch an der Unterschale 3 am in Normalfahrtrichtung hinteren Endbereich angeformt sein, so dass diese bei der Herstellung des Fahrgestells aus CFK-Werkstoff mit angeformt werden kann. Auch können im Rahmen, insbesondere an der Basis 7 des Unterteils 3 Achsböcke 12 angeformt oder als separate Bauteile befestigt, insbesondere angeschraubt sein. Die Achsböcke 12 sind jeweils paarweise zur Aufnahme einer Achse vorgesehen. Dabei sind die Achsbockpaare 12 jeweils durch eine Traverse 13 miteinander verbunden. Die Traverse 13 kann aus Metall oder vorzugsweise auch als CFK-Verbundwerkstoff bestehen.

Durch den entsprechenden Aufbau des Rahmens kann in den zwischen der Oberschale 2 und dem Unterteil 3 gebildeten Hohlraum, der gegebenenfalls durch betätigbare Verschlussplatten oder -klappen zugänglich gemacht wird, eine Anordnung von Aggregaten installiert werden, die demzufolge geschützt innerhalb des Hohlraumes angeordnet sind. Die Aggregate können über die Verschlussklappen oder dergleichen zugänglich sein, wobei auch die Verschlussplatten oder -klappen durchdringende Anschlussstutzen, vorzugsweise in verwechslungsfreier Konturierung vorgesehen sind, so dass entsprechende Anschlussteile in einfacher Weise installiert werden können.

In dem Hohlraum kann zum Beispiel der Motor 20 in Längsrichtung oder in Querrichtung eingebaut werden, sowie das Getriebe und ebenso der Antriebsstrang 21.

Insbesondere in Figur 7 veranschaulicht, können bei einem Sattelauflieger am in Fahrtrichtung vorderen Ende des Rahmens eine Aufnahme für einen Königsbolzen 14 und/oder für ein Kippzylinderlager eines Kippzylinders 15 ausgebildet und angeordnet sein. Diese Aufnahme ist vorzugsweise ebenfalls aus CFK-Verbundwerkstoff gebildet. Vorzugsweise ist die Halterung 14 für den Königsbolzen und ebenso das Kippzylinderlager des Kippzylinders 15 im Hohlraum des Rahmens zwischen der Basis 9 der Oberschale und der Basis 7 des Unterteils 3 angeordnet und an den Basisflächen 9 beziehungsweise 7 befestigt, angeformt oder stoffschlüssig mit dieser verbunden.

Zusätzlich kann im Bereich des Drehkreises der Sattelplatte die Basis 7 des Unterteils 3 eine Vertiefung nach Art einer Sicke aufweisen, in die unterseitig eine Verschleißplatte 16 eingelegt und an dieser fixiert ist.

Sofern auf dem Rahmen eine Transportmulde 17 angeordnet ist, wie beispielsweise in Figur 7 verdeutlicht, so besteht diese Transportmulde 17 vorzugsweise ebenfalls aus CFK-Verbundwerkstoff.

Vorzugsweise ist die Transportmulde 17 mindestens im Bereich ihrer Seitenwände doppellagig unter Einfluss eines Hohlraumes ausgebildet. Des Weiteren kann am Rahmen oder an der Transportmulde 17 eine Heizung, gegebenenfalls mit Wärmetauscher angeordnet sein, mittels derer die im Hohlraum der Seitenwände der Mulde 17 befindliche Luft erwärmt werden kann, so dass eine Temperierung ermöglicht ist. Selbstverständlich ist an Stelle einer Erwärmung auch eine Kühlung möglich, sofern ein entsprechendes Kühlaggregat installiert ist.

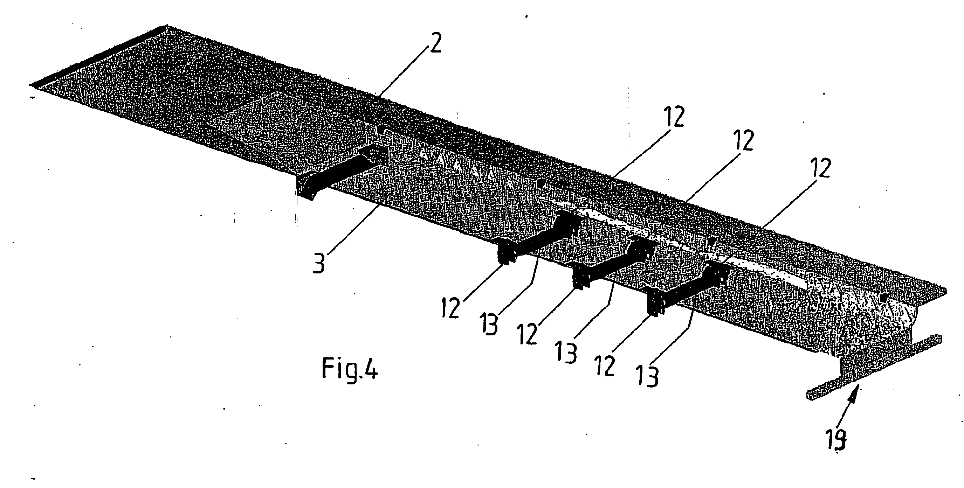

In Figur 4 ist ein Fahrgestell gezeigt, bei dem auf den Rahmen 1 eine Bodenplatte aufgelegt ist, die mit der Oberschale 2 verbunden, vorzugsweise verklebt ist. Eine solche Konstruktion dient dazu, die Fahrgestellhöhe zu minimieren, um einen möglichst hohen Aufbau aufsetzen zu können, ohne die zulässige Gesamthöhe zu überschreiten. Auch kann die Bodenplatte (bei Coilaufliegern) als Coilwanne ausgebildet sein oder ein oder mehrere Mulden zur Auflage von Coils aufweisen.

Am hinteren Ende des Fahrgestells ist ein Unterfahrschutz 19 vorgesehen, der gegebenenfalls und vorzugsweise ebenfalls aus CFK besteht.

Die Erfindung stellt somit ein Fahrgestell für LKW-Motorwagen, Anhänger oder Auflieger zur Verfügung, welches äußerst stabil und dennoch sehr leichtgewichtig ist, wobei insbesondere auch bei dem erfindungsgemäßen Aufbau der Mulde 17 eine erhebliche Gewichtsersparnis erreicht wird. Hierdurch werden die transportierbaren Nutzlasten erheblich angehoben, so dass sich der Mehraufwand nach kurzer Zeit amortisiert, der durch die Herstellung des Rahmens und/oder der Mulde aus Karbonfaser-Verbundwerkstoff resultiert.

An dem Rahmen 1 kann auch das Führerhaus 22 befestigt werden, welches vorzugsweise ebenfalls aus CFK- Werkstoff gefertigt ist.

## Patentansprüche

1. Fahrgestell für einen Motorwagen eines Lastkraftwagens, LKW-Anhänger oder Auflieger, bestehend aus einem Rahmen (1), an dem Fahrzeugachsen und gegebenenfalls ein Aufbau befestigbar sind, wobei der Rahmen (1) aus einem Carbon-Faser-Verbundwerkstoff besteht, **dadurch gekennzeichnet dass** der Rahmen (1) aus einer etwa U-förmigen Oberschale (2) und einem etwa U-förmigen Unterteil (3) jeweils in Form eines mehrlagigen CFK-Formteiles besteht, wobei die Oberschale (2) und das Unterteil (3) mit einander entgegen gerichteten Schenkeln (4,5) zusammengesetzt und miteinander verbunden sind, so dass zwischen Oberschale (2) und Unterteil (3) ein Hohlraum gebildet ist.

2. Fahrgestell nach Anspruch 1, **dadurch gekennzeichnet, dass** die Carbon-Fasern des Verbundwerkstoffes mit Harz getränkt und der so gebildete Werkstoff ausgehärtet ist.

3. Fahrgestell nach Anspruch 1 oder 2, **dadurch gekennzeichnet, dass** der Rahmen (1) aus Formteilen zusammengefügt ist, die aus CFK bestehen.

4. Fahrgestell nach einem der Ansprüche 1 bis 3, **dadurch gekennzeichnet, dass** die den Rahmen (1) bildenden Formteile jeweils aus mehreren Lagen CFK bestehen, die multidirektional zueinander ausgerichtet sind.

5. Fahrgestell nach einem der Ansprüche 1 bis 4, **dadurch gekennzeichnet, dass** die Schenkel (4,5) von Oberschale (2) und Unterteil (3) miteinander verbunden sind, insbesondere stoffschlüssig durch Verschmelzung, Verklebung und/oder Verschweißung.

6. Fahrgestell nach einem der Ansprüche 1 bis 4, **dadurch gekennzeichnet, dass** die Schenkel (5) des Unterteils (3) an ihrem freien Ende abgewinkelt sind, vorzugsweise rechtwinklig voneinander weg gerichtet, die Basis (7) des Unterteils (3) über die Schenkel (5) seitlich vorragt und die Oberschale (2) mit ihrer Basis (9) auf die abgewinkelten Enden (6) flächig aufgelegt und mit diesen verbunden ist sowie mit ihren gegebenenfalls ebenfalls abgewinkelten oder auch nicht abgewinkelten Schenkeln (4) an den vorragenden Enden (8) der Basis (7) des Unterteils (3) anliegt und mit dieser im Anlagebereich verbunden ist.

7. Fahrgestell nach Anspruch 6, **dadurch gekennzeichnet, dass** die freien Enden (6) der Schenkel (5) des Unterteils (3) beidseitig Abwinklungen aufweisen und im Querschnitt eine T-Form bilden, auf deren Querhaupt die Basis (9) der Oberschale (2) aufgelegt und mit dieser verbunden ist.

8. Fahrgestell nach einem der Ansprüche 1 bis 7, **dadurch gekennzeichnet, dass** die Oberschale (2) und/oder das Unterteil (3) in ihrer Basis Lochungen (10) aufweisen.

9. Fahrgestell nach einem der Ansprüche 1 bis 8, **dadurch gekennzeichnet, dass** die Oberschale (2) in ihren Schenkeln (4) Ausnehmungen (11) aufweist.

10. Fahrgestell nach Anspruch 9, **dadurch gekennzeichnet, dass** die Ausnehmungen (11) etwa dreieckig in wechselweise entgegengesetzter Ausrichtung sind.

11. Fahrgestell nach einem der Ansprüche 1 bis 10, **dadurch gekennzeichnet, dass** bei einem Fahrgestell für ein Kippfahrzeug die Kippwellenaufnahme (18) am Rahmen (1) insbesondere an der Oberschale (2) am in Fahrtrichtung hinteren Endbereich angeformt ist.

12. Fahrgestell nach einem der Ansprüche 1 bis 11, **dadurch gekennzeichnet, dass** am Rahmen (1), insbesondere an der Basis (7) des Unterteils (3), mindestens ein Achsbock (12) angeformt oder befestigt, insbesondere angeschraubt ist, der aus Metall oder vorzugsweise aus CFK-Verbundwerkstoff besteht.

13. Fahrgestell nach Anspruch 12, **dadurch gekennzeichnet, dass** Achsböcke (12) paarweise zur Aufnahme einer Achse vorgesehen sind.

14. Fahrgestell nach Anspruch 13, **dadurch gekennzeichnet, dass** die Achsbockpaare (12) jeweils durch eine Traverse (13) verbunden sind, die vorzugsweise aus CFK-Verbundwerkstoff besteht.

15. Fahrgestell nach einem der Ansprüche 1 bis 14, **dadurch gekennzeichnet, dass** bei luftgefedertem Fahrgestell die Luftbalgaufnahme(n) am Rahmen (1) angeformt sind.

16. Fahrgestell nach einem der Ansprüche 1 bis 15, **dadurch gekennzeichnet, dass** der Rahmen (1), insbesondere der aus U-förmigen Teilen zusammengesetzte Rahmen, mindestens einen Hohlraum aufweist, der durch Verschlussplatten oder -klappen verschlossen ist und in dem Aggregate, zum Beispiel Steuerungsteile, Luftbehälter, geschützt angeordnet sind, wobei von den Aggregaten Stutzen abgehen, die von der Außenseite, insbesondere Unterseite des Rahmens (1) zugänglich sind und vorzugsweise verwechslungsfrei konturierte Form aufweisen, wobei die Stutzen vorzugsweise an den Verschlussplatten oder -klappen angeordnet sind.

17. Fahrgestell nach den Ansprüchen 1 bis 16, **dadurch gekennzeichnet, dass** bei einem Sattelauflieger am in Fahrtrichtung vorderen Ende des Rahmens (1) eine Aufnahme (14) für einen Königsbolzen und/oder ein Kippzylinderlager ausgebildet ist, vorzugsweise auf CFK-Verbundwerkstoff angeformt ist.

18. Fahrgestell nach Anspruch 17, **dadurch gekennzeichnet, dass** eine Halterung (16) des Königsbolzens und/oder das Kippzylinderlager im Hohlraum des Rahmens (1) zwischen der Basis (9) der Oberschale (2) und der Basis (7) des Unterteils (3) angeordnet und an diesen befestigt, angeformt oder stoffschlüssig verbunden ist.

19. Fahrgestell nach Anspruch 17 oder 18, **dadurch gekennzeichnet, dass** im Bereich des Drehkreises der Sattelplatte der Rahmen (1) oder die Basis (7) des Unterteils (3) eine Vertiefung nach Art einer Sicke aufweist, in die unterseitig eine Verschleißplatte (16) eingelegt und an dieser fixiert ist.

20. Fahrgestell nach einem der Ansprüche 1 bis 19, **dadurch gekennzeichnet, dass** auf dem Rahmen (1) eine Bodenplatte und/oder ein Aufbau, insbesondere eine Transportmulde (17), angeordnet ist, der oder die aus CFK-Verbundwerkstoff besteht.

21. Fahrgestell nach Anspruch 20, **dadurch gekennzeichnet, dass** auf dem Rahmen (1) eine Transportmulde angeordnet ist, und dass die Transportmulde (17) mindestens im Bereich ihrer Seitenwände doppellagig unter Einschluss eines Hohlraumes ausgebildet ist.

22. Fahrgestell nach Anspruch 21, **dadurch gekennzeichnet, dass** der Hohlraum einen Abgaseinlass am in Fahrtrichtung vorderen Endbereich und einen Abgasauslass am hinteren Endbereich aufweist.

23. Fahrgestell nach Anspruch 21, **dadurch gekennzeichnet, dass** am Rahmen (1) oder an der Transportmulde (17) eine Heizung gegebenenfalls mit Wärmetauscher angeordnet ist, die oder der mit dem Hohlraum zwischen den Seitenwänden der Transportmulde (17) verbunden ist, um die Transportmulde (17), insbesondere deren Seitenwände zu beheizen.

24. Fahrgestell nach einem der Ansprüche 1 bis 16, **dadurch gekennzeichnet, dass** bei einem Sattelzugfahrzeug am in Fahrtrichtung hinteren Ende des Rahmens (1) eine Sattelplatte angeordnet ist, vorzugsweise aus CFK-Verbundwerkstoff angeformt ist.

25. Fahrgestell nach einem der Ansprüche 1 bis 24, **dadurch gekennzeichnet, dass** am als Kastenrahmen ausgebildeten Rahmen (1) die Aufnahmen für den Motor (20), das Getriebe, den Antriebsstrang (21) und die Federung des Fahrzeugs integriert ausgebildet sind.

26. Fahrgestell nach einem der Ansprüche 1 bis 25, **dadurch gekennzeichnet, dass** die Radkästen des Fahrzeugs als Bestandteile des Kastenrahmens ausgebildet sind.

## Claims

1. Chassis for a truck of a heavy goods vehicle, a trailer of a heavy goods vehicle or a semi-trailer, consisting of a frame (1), to which vehicle axles and optionally a structure can be fixed, wherein the frame (1) is made of a carbon fibre composite material, **characterised in that** the frame (1) consists of an approximately U-shaped upper shell (2) and an approximately U-shaped lower part (3), in each case in the form of a multilayer CFRP shaped part, wherein the upper shell (2) and the lower part (3) are placed with legs (4, 5) pointing in opposite directions and are connected to one another so that a hollow space is formed between the upper shell (2) and the lower part (3).

2. Chassis according to claim 1, **characterised in that** the carbon fibres of the composite material are impregnated with resin and the material thus formed is cured.

3. Chassis according to claim 1 or 2, **characterised in that** the frame (1) is composed of shaped parts which are made of CFRP.

4. Chassis according to one of claims 1 to 3, **characterised in that** the shaped parts forming the frame (1) are in each case made from several layers of CFRP which are oriented in a multi-directional manner with respect to one another.

5. Chassis according to one of claims 1 to 4, **characterised in that** the legs (4, 5) of the upper shell (2) and of the lower part (3) are connected to one another, in particular materially by means of fusion, adhesive bonding and/or welding.

6. Chassis according to one of claims 1 to 4, **characterised in that** the legs (5) of the lower part (3) are angled at their free end, preferably are directed away from one another at right angles, the base (7) of the lower part (3) protrudes laterally beyond the legs (5) and the upper shell (2) is placed with its base (9) flat against the angled ends (6) and is connected thereto and also bears with its legs (4), which may optionally also be angled or else may not be angled, against the protruding ends (8) of the base (7) of the lower part (3) and is connected thereto in the bearing region.

7. Chassis according to claim 6, **characterised in that** the free ends (6) of the legs (5) of the lower part (3) are angled at both sides and form a T-shape in cross section, against the crossmember of which the base (9) of the upper shell (2) is placed and is connected thereto.

8. Chassis according to one of claims 1 to 7, **characterised in that** the upper shell (2) and/or the lower part (3) have holes (10) in their base.

9. Chassis according to one of claims 1 to 8, **characterised in that** the upper shell (2) has openings (11) in its legs (4).

10. Chassis according to claim 9, **characterised in that** the openings (11) are approximately triangular and point alternately in opposite directions.

11. Chassis according to one of claims 1 to 10, **characterised in that**, in the case of a chassis for a tipper truck, the tipping shaft mount (18) is integrally formed on the frame (1), in particular on the upper shell (2) at the rear end region in the direction of travel.

12. Chassis according to one of claims 1 to 11, **characterised in that** at least one axle mount (12) which is made from metal or preferably from CFRP composite material is integrally formed or fixed, in particular by screwing, on the frame (1), in particular on the base (7) of the lower part (3).

13. Chassis according to claim 12, **characterised in that** axle mounts (12) are provided in pairs for holding an axle.

14. Chassis according to claim 13, **characterised in that** the pairs of axle mounts (12) are in each case connected by a crossbar (13) which is preferably made from CFRP composite material.

15. Chassis according to one of claims 1 to 14, **characterised in that**, in the case of an air-sprung chassis, the air bellows holder(s) are integrally formed on the frame (1).

16. Chassis according to one of claims 1 to 15, **characterised in that** the frame (1), in particular the frame composed of U-shaped parts, has at least one hollow space which is closed by closure plates or flaps, and air containers are arranged in a protected manner in the units, for example control parts, wherein leaving the units are connection pieces which are accessible from the outside, in particular from the underside of the frame (1), and preferably have a shape contoured in a confusion-free manner, wherein the connecting pieces are preferably arranged on the closure plates or flaps.

17. Chassis according to claims 1 to 16, **characterised in that**, in the case of a semi-trailer, a mount (14) for a kingpin and/or a tipping cylinder bearing is formed, preferably integrally formed from CFRP composite material, at the front end of the frame (1) in the direction of travel.

18. Chassis according to claim 17, **characterised in that** a securing means (16) for the kingpin and/or the tipping cylinder bearing is arranged in the hollow space of the frame (1) between the base (9) of the upper shell (2) and the base (7) of the lower part (3) and is fixed thereto, integrally formed thereon or materially connected thereto.

19. Chassis according to claim 17 or 18, **characterised in that**, in the region of the turning circle of the fifth wheel, the frame (1) or the base (7) of the lower part (3) has a depression in the manner of a groove, in which a wear plate (16) is placed on the underside and is fixed thereto.

20. Chassis according to one of claims 1 to 19, **characterised in that** a baseplate and/or a structure, in particular a transport trough (17), which is made from CFRP composite material is arranged on the frame (1).

21. Chassis according to claim 20, **characterised in that** a transport trough is arranged on the frame (1), and **in that** the transport trough (17), at least in the region of its side walls, is formed in two layers with the inclusion of a hollow space.

22. Chassis according to claim 21, **characterised in that** the hollow space has an exhaust gas inlet at the front end region and an exhaust gas outlet at the rear end region in the direction of travel.

23. Chassis according to claim 21, **characterised in that** a heating system optionally comprising heat exchangers is arranged on the frame (1) or on the transport trough (17), said heating system being connected to the hollow space between the side walls of the transport trough (17) in order to heat the transport trough (17), in particular the side walls thereof.

24. Chassis according to one of claims 1 to 16, **characterised in that**, in the case of an articulated vehicle, a fifth wheel is arranged, preferably is integrally formed from CFRP composite material, at the rear end of the frame (1) in the direction of travel.

25. Chassis according to one of claims 1 to 24, **characterised in that** the mounts for the engine (20), the gear mechanism, the drive train (21) and the suspension of the vehicle are integrated on the frame (1) designed as a box frame.

26. Chassis according to one of claims 1 to 25, **characterised in that** the wheel houses of the vehicle are formed as parts of the box frame.

## Revendications

1. Châssis pour une motrice de camion, une remorque de camion ou un semi-remorque, composé d'un châssis (1) sur lequel des essieux de véhicule et le cas échéant une carrosserie peuvent être fixés,
le châssis (1) se composant d'un matériau composite en fibres de carbone
**caractérisé en ce que** le châssis (1) se compose d'une enveloppe supérieure (2) à peu près en forme de U et d'une partie inférieure (3) à peu près en forme de U respectivement en forme d'une pièce moulée CFK (matière plastique renforcée de fibres de carbone) multicouche, l'enveloppe supérieure (2) et la partie inférieure (3) étant assemblées avec des montants (4, 5) orientés en sens inverse l'un par rapport à l'autre et reliées l'une à l'autre de manière à former une cavité entre l'enveloppe supérieure (2) et la partie inférieure (3).

2. Châssis selon la revendication 1, **caractérisé en ce que** les fibres de carbone du matériau composite sont imprégnées de résine et le matériau ainsi formé est durci.

3. Châssis selon la revendication 1 ou 2, **caractérisé en ce que** le châssis (1) est un assemblage de pièces moulées en CFK.

4. Châssis selon l'une quelconque des revendications 1 à 3, **caractérisé en ce que** les pièces moulées formant le châssis (1) sont composées respectivement de plusieurs couches de CFK, qui sont orientées l'une par rapport à l'autre de façon multidirectionnelle.

5. Châssis selon l'une quelconque des revendications 1 à 4, **caractérisé en ce que** les montants (4, 5) de l'enveloppe supérieure (2) et de la partie inférieure (3) sont reliés les uns aux autres, en particulier par correspondance de matière par fusion, collage et/ou soudage.

6. Châssis selon l'une quelconque des revendications 1 à 4, **caractérisé en ce que** les montants (5) de la partie inférieure (3) sont pliés au niveau de leur extrémité libre, s'éloignent de préférence l'un de l'autre en angle droit, la base (7) de la partie inférieure (3) dépasse latéralement les montants (5) et l'enveloppe supérieure (2) repose en surface avec sa base (9) sur les extrémités pliées (6) et est reliée à celles-ci et plaquée avec ses montants (4) également pliés le cas échéant ou également non pliés contre les extrémités (8) en saillie de la base (7) de la partie inférieure (3) et est reliée à celle-ci dans la zone de contact.

7. Châssis selon la revendication 6, **caractérisé en ce que** les extrémités libres (6) des montants (5) de la partie inférieure (3) présentent des coudes des deux côtés et forment une section transversale en T, sur laquelle tête transversale la base (9) de l'enveloppe supérieure (2) est posée et reliée à celle-ci.

8. Châssis selon l'une quelconque des revendications 1 à 7, **caractérisé en ce que** l'enveloppe supérieure (2) et/ou la partie inférieure (3) présentent dans leur base des perçages (10).

9. Châssis selon l'une quelconque des revendications 1 à 8, **caractérisé en ce que** l'enveloppe supérieure (2) présente des évidements (11) dans ses montants (4).

10. Châssis selon la revendication 9, **caractérisé en ce que** les évidements (11) sont à peu près triangulaires orientés tour à tour de façon opposée.

11. Châssis selon l'une quelconque des revendications 1 à 10, **caractérisé en ce que** dans le cas d'un châssis pour véhicule basculant, le logement (18) de l'arbre basculant est formé au niveau du châssis (1) en particulier au niveau de l'enveloppe supérieure (2) au niveau de la zone d'extrémité arrière dans le sens de déplacement.

12. Châssis selon l'une quelconque des revendications 1 à 11, **caractérisé en ce qu'**au moins un support d'essieu (12) est formé ou fixé, en particulier vissé, au niveau du châssis (1), en particulier au niveau de la base (7) de la partie inférieure (3), qui est en métal ou de préférence en matériau composite CFK.

13. Châssis selon la revendication 12, **caractérisé en ce que** des supports d'essieu (12) sont prévus par paire pour recevoir un essieu.

14. Châssis selon la revendication 13, **caractérisé en ce que** les paires de support d'essieu (12) sont reliées respectivement par une traverse (13), qui est de préférence en matériau composite CFK.

15. Châssis selon l'une quelconque des revendications 1 à 14, **caractérisé en ce que** dans le cas d'un châssis à suspension pneumatique, le(s) logement(s) de soufflet à air est (sont) formé(s) au niveau du châssis (1).

16. Châssis selon l'une quelconque des revendications 1 à 15, **caractérisé en ce que** le châssis (1), en particulier le châssis composé de pièces en forme de U, présente au moins une cavité, qui est fermée par des plaques ou clapets de fermeture et dans laquelle sont disposés de manière protégée des groupes, par exemple des pièces de commandes, des réservoirs d'air, dans lequel des montants partent des groupes, qui sont accessibles depuis le côté extérieur, en particulier depuis le côté inférieur du châssis (1) et présentent de préférence une forme profilée unique, dans lequel les montants sont disposés de préférence au niveau des plaques ou clapets de fermeture.

17. Châssis selon les revendications 1 à 16, **caractérisé en ce que** dans le cas d'un semi-remorque, un logement (14) pour une cheville maîtresse et/ou un palier cylindrique basculant est réalisé au niveau de l'extrémité avant du châssis (1) dans le sens de déplacement, est formé de préférence sur du matériau composite CFK.

18. Châssis selon la revendication 17, **caractérisé en ce qu'**une fixation (16) de la cheville maîtresse et/ou le palier cylindrique basculant est disposé dans la cavité du châssis (1) entre la base (9) de l'enveloppe supérieure (2) et la base (7) de la partie inférieure (3) et est fixé, formé ou relié par correspondance de matière à celle-ci.

19. Châssis selon la revendication 17 ou 18, **caractérisé en ce que** dans la zone du cercle de rotation de la plaque de semi-remorque, le châssis (1) ou la base (7) de la partie inférieure (3) présente un évidement à la manière d'une moulure, dans laquelle une plaque d'usure (16) est insérée côté inférieur et est fixée à celle-ci.

20. Châssis selon l'une quelconque des revendications 1 à 19, **caractérisé en ce qu'**une plaque de fond et/ou une carrosserie, en particulier une benne de transport (17) en matériau composite CFK est disposée sur le châssis (1).

21. Châssis selon la revendication 20, **caractérisé en ce qu'**une benne de transport est disposée sur le châssis (1) et **en ce que** la benne de transport (17) est, au moins dans la zone de ses parois latérales, formée à double couche incluant une cavité.

22. Châssis selon la revendication 21, **caractérisé en ce que** la cavité présente une entrée de gaz d'échappement au niveau de la zone d'extrémité avant dans le sens de déplacement et une sortie de gaz d'échappement au niveau de la zone d'extrémité arrière.

23. Châssis selon la revendication 21, **caractérisé en ce qu'**un dispositif de chauffage le cas échéant avec un échangeur thermique est disposé au niveau du châssis (1) ou au niveau de la benne de transport (17), lequel dispositif ou échangeur est relié à la cavité entre les parois latérales de la benne de transport (17) pour chauffer la benne de transport (17) en particulier ses parois latérales.

24. Châssis selon l'une quelconque des revendications 1 à 16, **caractérisé en ce que** dans le cas d'un semi-remorque une plaque de semi-remorque est disposée à l'extrémité arrière du châssis (1) dans le sens de déplacement, réalisée de préférence à partir de matériau composite CFK.

25. Châssis selon l'une quelconque des revendications 1 à 24, **caractérisé en ce que** les logements pour le moteur (20), la boîte de vitesse, la chaîne cinématique (21) et la suspension du véhicule sont réalisés de manière intégrée au niveau du châssis (1) formé comme châssis à caisson.

26. Châssis selon l'une quelconque des revendications 1 à 25, **caractérisé en ce que** les passages de roue du véhicule sont réalisés en tant que composants du châssis à caisson.
